# EUROPEAN PATENT SPECIFICATION

(11) **EP 2 910 735 B1**
(45) Date of publication and mention of the grant of the patent: **01.07.2020**
(21) Application number: 15155553.9
(22) Date of filing: 18.02.2015
(51) Int. Cl.: F01D 5/08, F01D 25/12, F02C 7/18

(54) **BORE BASKET FOR A GAS POWERED TURBINE**
BOHRLOCHKORB FÜR EINE GASBETRIEBENE TURBINE
PANIER D'ALÉSAGE D'UNE TURBINE À GAZ

(30) Priority: 21.02.2014 US 201461942896 P
(43) Date of publication of application: 26.08.2015
(73) Proprietor: United Technologies Corporation, Farmington, CT 06032 (US)
(72) Inventor: Gons, William M., Camp Hill, PA 17011 (US)
(74) Representative: Dehns

(56) References cited:
- EP-A2- 0 894 942
- EP-A2- 1 132 578
- EP-A2- 2 650 474
- US-A- 2 883 151
- US-A- 3 999 376
- US-A- 4 190 398

## Description

### TECHNICAL FIELD

The present disclosure relates to rotor bore cooling for a gas powered turbine, and more specifically to a bore basket for facilitating the same.

### BACKGROUND

Gas powered turbines, such as those utilized in turbine engines for commercial aircraft, include a compressor section, a combustor section, and a turbine section. The compressor, combustor and turbine sections operate in conjunction with each other to generate rotation of a shaft that runs through each of the sections. In the case of some aircraft engines, the shaft drives a fan. In alternate example gas powered turbines, such as land based turbines, the rotation of the shaft is utilized to generate electrical power.

Each of the compressor section and the turbine section includes multiple rotors arranged sequentially along a fluid flowpath. Each rotor includes a rotor bore protruding radially inward toward the shaft. Some engines include a hot air flow aft of the rotors, relative to fluid flow through the gas powered turbine. Absent a mechanical separation, hot air from the hot air flow contacts the rotor bores and significantly increases the heat to which the rotor bores are exposed.

In some examples, the rotor bores are particularly heat sensitive, and a rotor basket is disposed between the rotor bores and the shaft. Existing bore baskets are constructed of a single metal cylinder disposed about the shaft. The rotor basket defines a hot air passageway between the rotor basket and the shaft, and the air from the hot air flow is passed to a return opening in the shaft through the passageway. The basket operates as a heat shield and a flow guide, providing separation between the hot air flow and sensitive rotor bores, and shielding the sensitive rotor bores from the heat of the hot air flow.

US 2 883 151 discloses a turbine cooling system.

### SUMMARY OF THE INVENTION

A gas powered turbine according to the invention is set forth in claim 1.

In an embodiment of the foregoing gas powered turbine, the mechanical interconnection is at least one of a brazed connection and a welded connection.

In a further embodiment of any of the foregoing gas powered turbines, the bore basket includes at least one structural strut connecting the first radially outward cylinder to the radially inward cylinder.

In a further embodiment of any of the foregoing gas powered turbines, the at least one strut includes a plurality of struts disposed circumferentially about the radially inward strut at least one axial position.

In a further embodiment of any of the foregoing gas powered turbines, the at least one strut is mechanically interconnected with at least one of the first radially outward cylinder and the radially inward cylinder, such that the at least one strut and the bore basket include a unitary structure.

In a further embodiment of any of the foregoing gas powered turbines, the first end of the bore basket is aft ward in the gas turbine, relative to fluid flow, and the second end of the bore basket is forward in the gas turbine relative to fluid flow.

In a further embodiment of any of the foregoing gas powered turbines, the radially inward cylinder includes a seat structure having an axially aligned surface, the axially aligned surface of the seat structure contacts an inner surface of the first radially outward cylinder, and the mechanical interconnection is a mechanical interconnection between the axially aligned surface of the seat structure and the inner surface of the first radially outward cylinder.

In a further embodiment of any of the foregoing gas powered turbines, the first end of the bore basket is aft ward in the gas turbine, relative to fluid flow, and the second end of the bore basket is forward in the gas turbine relative to fluid flow.

A further embodiment of any of the foregoing gas powered turbines, includes a structure at least partially defining a forward wall of the bore, and the structure includes a cool air inlet into the bore.

In a further embodiment of any of the foregoing gas powered turbines, the hub, the bore, and the bore basket define a cool air flowpath from the inlet, along a radially outward surface of the first radially outward cylinder, through the radially aligned opening on a first end of the bore basket into the gap defined by the radially outward first cylinder and the radially inward second cylinder; and through the radially aligned opening on a second end of the bore basket opposite the first end.

The foregoing features and elements may be combined in any combination without exclusivity, unless expressly indicated otherwise.

These and other features of the present invention can be best understood from the following specification and drawings, the following of which is a brief description.

### BRIEF DESCRIPTION OF THE DRAWINGS

Figure 1 schematically illustrates a gas turbine engine.
Figure 2 schematically illustrates a rotor portion of the gas turbine engine.
Figure 3 schematically illustrates a cross section of the bore basket of Figure 2, isolated from the gas turbine engine.
Figure 4 schematically illustrates a cross section of an alternate bore basket isolated from the gas turbine engine.
Figure 5 schematically illustrates the alternate bore basket of Figure 4 in a gas powered turbine.

### DETAILED DESCRIPTION OF AN EMBODIMENT

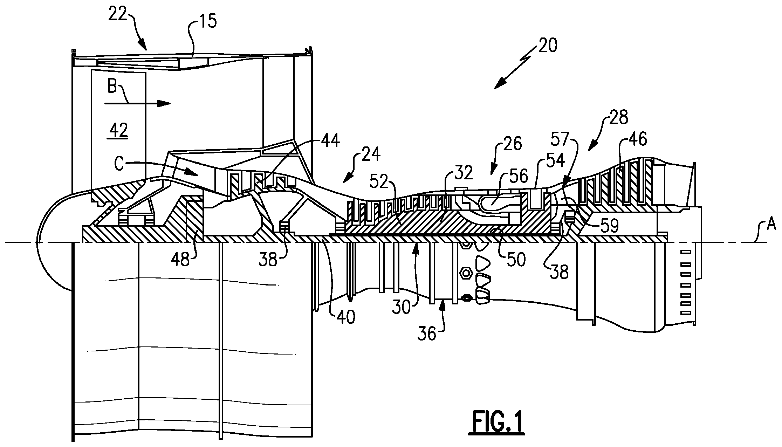

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core air flow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core air flow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48. In some examples, the engine 20 can be an engine without a geared system, such as a low bypass engine.

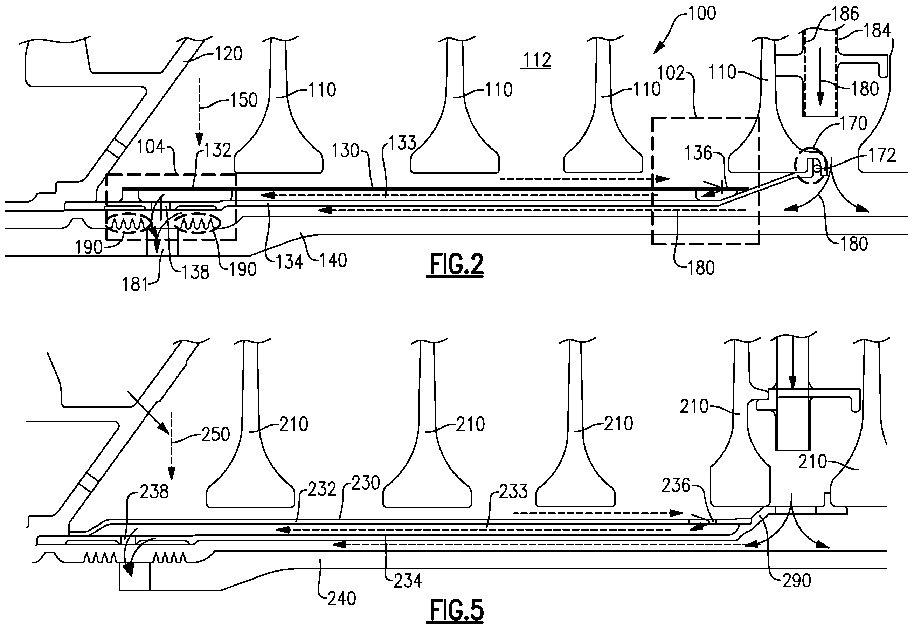

Figure 2 illustrates a rotor bore section 100 including a bore basket 130 disposed about a shaft 140. The rotor bore section 100 corresponds to either the compressor section 24 or the turbine section 28 of the gas turbine engine 20 of Figure 1.

Each rotor in the corresponding section 24, 28 includes a rotor bore 110 that extends radially inward toward the shaft 140. The rotor bores 110 are disposed in a rotor bore opening 112 that is defined by the bore basket 130, a hub structure 120 located fore of the rotor bore opening 112, and a snap fit arm 170 connecting the bore basket 130 and an aft most rotor bore 110. A retaining ring 172 maintains the connection between the bore basket 130 and the aft most rotor bore 110, and prevents air leakage between the rotor bore opening 112 and adjacent air flows.

Immediately aft of the rotor bore section 100 is a hot air connection 184, which provides a hot air flow 180 through an anti-vortex tube 186, or any other hot air supply. In some gas turbine engines 20, the rotor bores 110 are sensitive to high temperatures, and the heat from the hot air flow 180 can reduce the performance of the rotor bores 110 if the hot air is allowed to contact the rotor bores 110. To prevent the hot air flow 180 from heating the rotor bores 110, the bore basket 130 isolates the hot air flow 180 from the air in the rotor bore opening 112.

The bore basket 130 is constructed of a first, radially outward cylinder 132 and a second, radially inward cylinder 134. A fluid passageway 133 is defined by a radial gap between the radially outward cylinder 132 and the radially inward cylinder 134. A radially aligned opening 136 is positioned in the radially outward cylinder 132 at a first end 102 and allows air to flow from the bore opening 112 into the fluid passageway 133. Similarly, a radially aligned opening 138 in the radially inward cylinder 134 is positioned at a second end 104. The radially outward cylinder 132 and the radially inward cylinder 134 are mechanically interconnected such that the bore basket 130 is a single, unitary, structure.

To further cool the rotor bore section 100, a cold air flow 150 is provided from the forward hub structure 120 into the rotor bore opening 112. The radially outward cylinder 132 of the bore basket 130 forces the cold air flow 150 to flow aft, under the rotor bores 110 along the exterior surface of the rotor bore basket 130. The cold air flow 150 contacts and cools each of the rotor bores 110. Once the cold air flow 150 reaches the first end 102 of the bore basket 130, the cold air flow 150 passes through the radially aligned opening 136 in the radially outward cylinder 132 and into the fluid passageway 133.

The bore basket 130 forces the cold air flow 150 along the fluid passageway 133 to the radially aligned opening 138 at the second end 104 of the radially inward cylinder 134. The cold air flow 150 then passes through the radially aligned opening 138 and joins with the hot air flow 180 at a combined air flow 182. The combined air flow 182 passes through an opening 181 in the shaft 140 and is expelled from the system. In some examples, the expelled air is used elsewhere in the engine. In some examples, the radially aligned openings 136, 138 are multiple openings circumferentially disposed about the corresponding cylinder 132, 134. In these examples, the radially aligned openings 136, 138 are located at approximately the same axial position, relative to an axis defined by the bore basket 130.

Protruding from the shaft 140 and adjacent to the opening 181 on the shaft 140 are multiple sealing elements 190. The sealing elements 190 allow air to pass from the aft side of the sealing elements 190 to the opening 181. As air passes through the seals, the pressure of the air is decreased. This results in a decrease in the pressure of the hot air flow 180 as it crosses the sealing elements 190 to the opening 181. Absent the pressure drop from the sealing elements 190, hot air from the hot air flow 180 passes through the bore basket 130 into the bore opening 112 in a backflow manner, due to the lower pressure of the cold air flow 150 relative to the hot air flow 180. Why mention this, it makes it sound like this is the design intent when this is actually a bad condition. Radially outward of the shaft opening 181, and radially inward of the radially aligned opening 138 in the radially inward cylinder 134, the hot air flow 180 joins an air flow from the rotor bore opening 112.

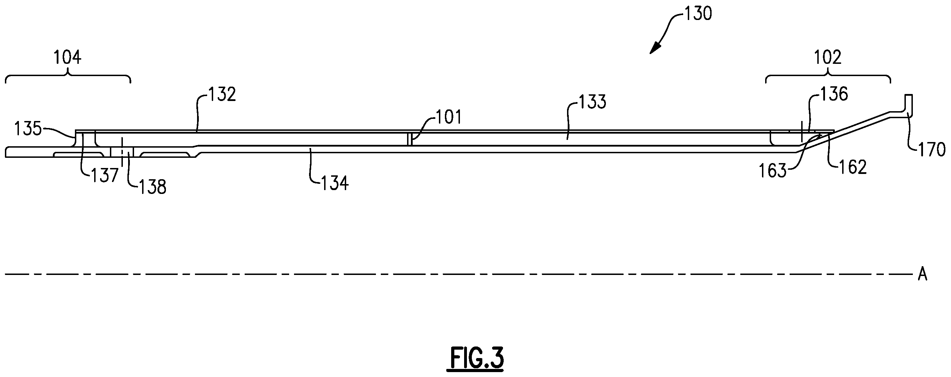

With continued reference to Figure 2, and with like numerals indicating like elements, Figure 3 schematically illustrates a cross section of the bore basket 130 of Figure 2 isolated from the gas turbine engine 20. The bore basket 130 includes a radially outward cylinder 132 and a radially inward cylinder 134. The radially inward cylinder 134 is disposed within the outward cylinder 132, and the two cylinders 132, 134 are generally coaxial, defining a single axis A. The inner and outward cylinders 132, 134 define a fluid passageway 133 in a gap between the two cylinders 132, 134.

The radially outward cylinder 132 includes a radially aligned opening 136 on a first end 102 of the bore basket 130. In alternate examples, the radially outward cylinder 132 can include multiple radially aligned openings 136 disposed about the circumference of the first end 102 of the outward cylinder 132. Similarly, the radially inward cylinder 134 includes a radially aligned opening 138 disposed at the second end 104 of the bore basket 130. In alternate examples, the radially inward cylinder 134 can include multiple radially aligned openings 138 disposed about the circumference of the second end 104.

Referring still to Figures 2 and 3, the radially outward cylinder 132 and the radially inward cylinder 134 contact each other at a first end 102 contact surface 162 and a second end 104 contact surface 137. The second end 104 contact surface 137 is defined on a radial protrusion 135 of the radially inward cylinder 134. The first end 102 contact surface 162 is positioned on a shelf feature 163 of the radially inward cylinder 134. At the contact surfaces 137, 162 the radially outward cylinder 132 and the radially inward cylinder 134 are mechanically interconnected. In some examples, the mechanical interconnection is achieved via a brazing process that metallurgically joins the cylinders 132, 134 together into a single, unitary piece. In alternate examples, the mechanical interconnection is achieved via a welding process, or any other process that results in joining the two cylinders 132, 134 into a single unitary piece.

In the illustrated example of Figure 3, the arrangement of the cylinders 132, 134 is structurally supported via at least one structural strut 101. The structural strut 101 is disposed within the fluid passageway 133 defined by the cylinders 132, 134 and provides structural support to the fluid passageway. In some examples, the structural struts 101 can be multiple struts disposed circumferentially about the fluid passageway. In other examples the structural strut 101 can be a single sheet of material, such as a metal, that contacts both the radially inward cylinder 134 and the radially outward cylinder 132. In the alternate example, the structural strut includes multiple openings in the sheet of material. The openings allow fluid to pass through the structural strut 101. In either case, the structural strut 101 is physically connected to at least one of the cylinders 132, 134 and provides structural support. Furthermore, the structural strut 101 is configured in a manner so as not to significantly impede air flow passing through the passageway 133. In yet another alternate example, the structural struts run from the second end 104 to first end 102, in alignment with the fluid flow.

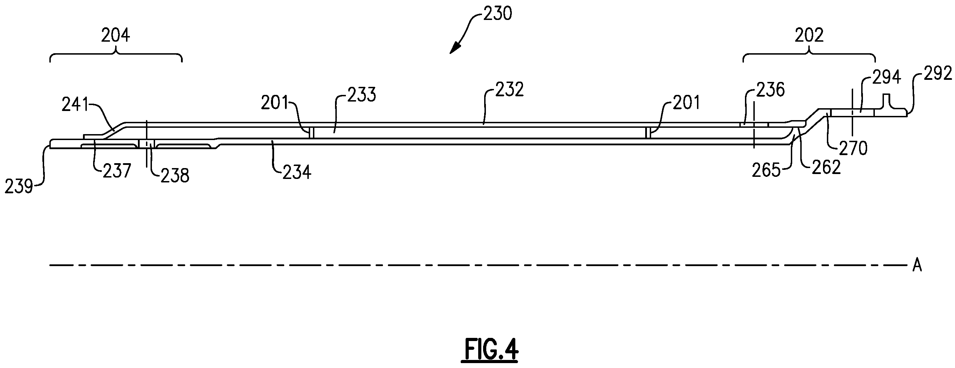

In alternate examples, such as the example illustrated in Figure 4 and described below, structural struts 101 can be placed at multiple axial positions to provide additional structural support. Depending on the configuration of the structural strut 101, the structural struts 101 can also serve as flow guides, guiding and directing the flow through the fluid passageway 133. Flow guides can also alter fluid flow characteristics through the fluid passageway 133. By way of example, structural struts 101 arranged as fluid flow guides can impart swirl on or eliminate swirl from a fluid passing through the fluid passageway 133.

The radially inward cylinder 134 further includes a snap fit arm 170 that provides a snap fit against an adjacent rotor bore 110 (illustrated in Figure 2) when the bore basket 130 is in an installed position. In the installed position, a radially aligned surface 139 at the second end 104 of each of the radially inward cylinder 134 and the radially outward cylinder 132 contacts an adjacent hub structure 120 (illustrated in Figure 2). The snap fit of the snap fit arm 170 and the contact with the hub structure 120 maintain the bore basket 130 in axial position relative to the engine static structure.

With continued reference to Figures 2 and 3, and with like numerals indicating like elements, Figure 4 schematically illustrates a cross section of an alternate example bore basket 230. As with the example of Figure 3, the bore basket 230 includes a radially outward cylinder 232 and a radially inward cylinder 234. The radially inward cylinder 234 is disposed within the radially outward cylinder 232, and the two cylinders 232, 234 are generally coaxial, defining a single axis A. The radially inward and outward cylinders 232, 234 define a fluid passageway 233 in a gap between the two cylinders 232, 234.

The radially outward cylinder 232 includes a radially aligned opening 236 on a first end 202 of the bore basket 230. In alternate examples, the radially outward cylinder 232 can include multiple radially aligned openings 236 disposed about the circumference of the first end 202 of the radially outward cylinder 232. Similarly, the inward cylinder 234 includes a radially aligned opening 238 disposed at the second end 204 of the bore basket 230. In alternate examples, the radially inward cylinder 234 can include multiple radially aligned openings 238 disposed about the circumference of the second end 204.

The radially outward cylinder 232 contacts the radially inward cylinder 234 at a first end 202 contact surface 262 and a second end 204 contact surface 237. The second end 204 contact surface 237 is a contact surface between a radially outward facing portion of the radially inward cylinder 234 and a radially inward facing surface of a radially inward protruding arm 241 on the second end of the radially outward cylinder 232. The first end contact surface 262 is a contact surface between a radially inward facing surface of the radially outward cylinder 232 and a step portion 265 of the first end 202 of the radially inward cylinder 234.

The first end 202 of the radially inward cylinder further includes a snap fit arm 270 that includes a snap fit feature 292 and a hot air flow opening 294. When the bore basket 230 is in the installed position, the snap fit feature 292 of the snap fit arm 270 contacts a rotor aft of the rotor bore opening. The hot air flow opening 294 lines up with an air inlet form an anti-vortex tube, or other hot air source, and allows hot air to pass under the bore basket 230 and flow between the shaft and the bore basket 230.

On the second end 204, the radially outward cylinder 232 includes an axial end surface 239. The axial end surface 239 contacts a fore hub structure 220 (illustrated in Figure 5) when the bore basket 230 is installed. The contact with the fore hub structure 220 and the contact with the aftward rotor bore prevents the bore basket 230 shifting axially relative to a turbine static structure.

As with the example of Figure 3, the bore basket 230 of Figure 4 includes multiple structural struts 201. The structural struts 201 of Figure 4 operate in the same manner and serve the same function as the structural struts 101 of Figure 3. In an alternate example, the structural struts 201 run from the second end 204 to the first end 202 in alignment with the fluid flow.

With continued reference to Figures 2 and 4, and with like numerals indicating like elements, Figure 5 schematically illustrates the alternate bore basket 230 of Figure 4 installed in a gas powered turbine. As with the example bore basket 130 of Figure 2, the bore basket 230 directs a cold air flow 250 across the rotor bores 210 and into a fluid passageway 233 in the bore basket 230. The snap fit arm 290 of the bore basket 230 connects to an aft most rotor bore 210, and a foremost surface 239 of the bore basket 230 contacts the rotor hub structure 220. The example bore basket 230 of Figure 5 isolates a hot air flow 280 from the cold air flow 250, and prevents backflow into a rotor bore opening 212 in the manner described above with regards to Figure 2.

While the above multi-piece bore basket 130, 230 is described with regards to a rotor section in a gas powered turbine engine 20, it is understand that the same principles and components could be applied to any gas powered turbine, including a land based turbine, and are not limited to aircraft engines.
Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas powered turbine (20) comprising:
a compressor section (24);
a combustor (26) fluidly connected to the compressor (24);
a turbine section (28) fluidly connected to the combustor (26);
a rotor bore opening (112;212) disposed radially inward of a plurality of rotors in one of said compressor section (24) and said turbine section (28), wherein the rotor bore opening (112;212) is defined by a forward hub structure (120;220), a bore basket (130;230) and a connection between said bore basket (130;230) and an aft most rotor bore (110) in said rotor bore opening (112;212);
wherein said bore basket (130;230) defines a cylinder having an axis, and wherein said bore basket (130;230) comprises:
a radially outward first cylinder (132;232);
a radially inward second cylinder (134;234) disposed within said radially outward first cylinder (132;232);
an axially aligned gap (133;233) defined by said radially outward first cylinder (132;232) and said radially inward second cylinder (134;234); and
a mechanical interconnection connecting said radially outward first cylinder (132;232) to said radially inward second cylinder (134;234), such that said radially outward first cylinder (132;232) and said radially inward second cylinder (134;234) are a unitary structure;
wherein said radially outward first cylinder (132; 232) has at least one radially aligned opening (136;236) on a first end (102;202) of said bore basket (130;230) and said radially inward second cylinder has a radially aligned opening (138;238) on a second end (104;204) of said bore basket (130;230) opposite said first end (102;202); and
wherein said radially inward cylinder (134;234) comprises a snap fit arm (170;270), and wherein said snap fit arm (170;270) interfaces with a rotor bore (110) aft of said rotor bore opening (112;212).

2. The gas powered turbine of claim 1, wherein said mechanical interconnection is at least one of a brazed connection and a welded connection.

3. The gas powered turbine of claim 1 or 2, wherein the bore basket (130;230) further comprises at least one structural strut (101;201) connecting said radially outward first cylinder (132;232) to said radially inward cylinder (134;234).

4. The gas powered turbine of claim 3, wherein the at least one strut (101;201) comprises a plurality of struts (101;201) disposed circumferentially about said radially inward cylinder (134;234) at at least one axial position.

5. The gas powered turbine of claim 3 or 4, wherein said at least one strut (101;201) is mechanically interconnected with at least one of said radially outward first cylinder (132;232) and said radially inward cylinder (134;234), such that the at least one strut (101;201) and the bore basket (130;230) comprise a unitary structure.

6. The gas powered turbine of any preceding claim, wherein said radially inward cylinder (134;234) comprises a seat structure having an axially aligned surface, and wherein said axially aligned surface of said seat structure contacts an inner surface of said first radially outward cylinder (132;232).

7. The gas powered turbine of claim 6, wherein said mechanical interconnection is a mechanical interconnection between said axially aligned surface of said seat structure and said inner surface of said first radially outward cylinder (132;232).

8. The gas powered turbine of any preceding claim, wherein said radially inward cylinder (134;234) comprises a second end radially outward facing contact surface (137;237) at said second end (104;204), said first radially outward cylinder (132;232) comprises a second end radially inward facing contact surface (137;237) at said second end (104;204), and wherein said second end radially outward facing contact surface (137;237) and second end radially inward facing contact surface (137;237) are mechanically interconnected.

9. The gas powered turbine of any preceding claim, wherein said first end (102;202) of said bore basket (130;230) is aft ward in said gas turbine (20), relative to fluid flow, and wherein said second end (104;204) of said bore basket (130;230) is forward in said gas turbine (20) relative to fluid flow.

10. The gas powered turbine of any preceding claim, further comprising a structure at least partially defining a forward wall of said bore, and wherein said structure includes a cool air inlet into said bore.

11. The gas powered turbine of claim 10, wherein said hub (120), said bore (110), and said bore basket (130;230) define a cool air flowpath from said inlet, along a radially outward surface of said first radially outward cylinder (132;232), through said radially aligned opening (136;236) on a first end (102;202) of said bore basket (130;230) into said gap (133;233) defined by said radially outward first cylinder (132;232) and said radially inward second cylinder (134;234); and through said radially aligned opening (138;238) on a second end (104;204) of said bore basket (130;230) opposite said first end (102;202).

## Patentansprüche

1. Gasbetriebene Turbine (20), umfassend:
einen Verdichterabschnitt (24);
eine Brennkammer (26), die mit dem Verdichter (24) fluidisch verbunden ist;
einen Turbinenabschnitt (28), der mit der Brennkammer (26) fluidisch verbunden ist;
eine Rotorbohrlochöffnung (112; 212), die radial nach innen von einer Vielzahl von Rotoren in einem von dem Verdichterabschnitt (24) und dem Turbinenabschnitt (28) angeordnet ist, wobei die Rotorbohrlochöffnung (112; 212) durch eine vordere Nabenstruktur (120; 220), einen Bohrlochkorb (130; 230) und eine Verbindung zwischen dem Bohrlochkorb (130; 230) und einem hintersten Rotorbohrloch (110) in der Rotorbohrlochöffnung (112; 212) definiert ist;
wobei der Bohrlochkorb (130; 230) einen Zylinder mit einer Achse definiert und wobei der Bohrlochkorb (130; 230) Folgendes umfasst:
einen radial nach außen gerichteten ersten Zylinder (132; 232);
einen radial nach innen gerichteten zweiten Zylinder (134; 234), der innerhalb des radial nach außen gerichteten ersten Zylinders (132; 232) angeordnet ist;
einen axial ausgerichteten Spalt (133; 233), der durch den radial nach außen gerichteten ersten Zylinder (132; 232) und durch den radial nach innen gerichteten zweiten Zylinder (134; 234) definiert ist; und
eine mechanische Verbindung, welche den radial nach außen gerichteten ersten Zylinder (132; 232) mit dem radial nach innen gerichteten zweiten Zylinder (134; 234) derart verbindet, dass der radial nach außen gerichtete erste Zylinder (132; 232) und der radial nach innen gerichtete zweite Zylinder (134; 234) eine einheitliche Struktur sind;
wobei der radial nach außen gerichtete erste Zylinder (132; 232) mindestens eine radial ausgerichtete Öffnung (136; 236) an einem ersten Ende (102; 202) des Bohrlochkorbs (130; 230) aufweist und wobei der radial nach innen gerichtete zweite Zylinder eine radial ausgerichtete Öffnung (138; 238) an einem zweiten Ende (104; 204) des Bohrlochkorbs (130; 230) gegenüber dem ersten Ende (102; 202) aufweist; und
wobei der radial nach innen gerichtete zweite Zylinder (134; 234) einen Schnellverschlussarm (170; 270) aufweist und wobei der Schnellverschlussarm (170; 270) mit einem Rotorbohrloch (110) hinter der Rotorbohrlochöffnung (112; 212) eine Schnittstelle bildet.

2. Gasbetriebene Turbine nach Anspruch 1, wobei die mechanische Verbindung mindestens eine von einer Lötverbindung und einer Schweißverbindung ist.

3. Gasbetriebene Turbine nach Anspruch 1 oder 2, wobei der Bohrlochkorb (130; 230) ferner mindestens eine Strukturstrebe (101; 201) umfasst, die den radial nach außen gerichteten ersten Zylinder (132; 232) mit den radial nach innen gerichteten Zylinder (134; 234) verbindet.

4. Gasbetriebene Turbine nach Anspruch 3, wobei die mindestens eine Strebe (101; 201) eine Vielzahl von Streben (101; 201) umfasst, die in Umfangsrichtung um den radial nach innen gerichteten Zylinder (134; 234) in mindestens einer axialen Position angeordnet ist.

5. Gasbetriebene Turbine nach Anspruch 3 oder 4, wobei die mindestens eine Strebe (101; 201) mechanisch mit mindestens einem des radial nach außen gerichteten ersten Zylinders (132; 232) und des radial nach innen gerichteten Zylinders (134; 234) derart verbunden ist, dass die mindestens eine Strebe (101; 201) und der Bohrlochkorb (130; 230) eine einheitliche Struktur umfassen.

6. Gasbetriebene Turbine nach einem der vorstehenden Ansprüche, wobei der radial nach innen gerichtete Zylinder (134; 234) eine Sitzstruktur mit einer axial ausgerichteten Fläche umfasst und wobei die axial ausgerichtete Fläche der Sitzstruktur eine Innenfläche des ersten radial nach außen gerichteten Zylinders (132; 232) berührt.

7. Gasbetriebene Turbine nach Anspruch 6, wobei die mechanische Verbindung eine mechanische Verbindung zwischen der radial ausgerichteten Fläche der Sitzstruktur und der Innenfläche des ersten radial nach außen gerichteten Zylinders (132; 232) ist.

8. Gasbetriebene Turbine nach einem der vorstehenden Ansprüche, wobei der radial nach innen gerichtete Zylinder (134; 234) eine radial nach außen gerichtete Kontaktfläche (137; 237) des zweiten Endes an dem zweiten Ende (104; 204) umfasst, wobei der erste radial nach außen gerichtete Zylinder (132; 232) eine radial nach innen gerichtete Kontaktfläche (137; 237) des zweiten Endes an dem zweiten Ende (104; 204) umfasst, und wobei die radial nach außen gerichtete Kontaktfläche (137; 237) des zweiten Endes und die radial nach innen gerichtete Kontaktfläche (137; 237) des zweiten Endes mechanisch verbunden sind.

9. Gasbetriebene Turbine nach einem der vorstehenden Ansprüche, wobei das erste Ende (102; 202) des Bohrlochkorbs (130; 230) relativ zur Fluidströmung in der Gasturbine (20) nach hinten gerichtet ist und wobei das zweite Ende (104; 204) des Bohrlochkorbs (130; 230) relativ zur Fluidströmung in der Gasturbine (20) nach vorn gerichtet ist.

10. Gasbetriebene Turbine nach einem der vorstehenden Ansprüche, ferner umfassend eine Struktur, die mindestens teilweise eine nach vorn gerichtete Wand des Bohrlochs definiert und wobei die Struktur einen Kühllufteinlass in dem Bohrloch beinhaltet.

11. Gasgetriebene Turbine nach Anspruch 10, wobei die Nabe (120), das Bohrloch (110) und der Bohrlochkorb (130; 230) einen Kühlluftströmungsweg von dem Einlass entlang einer radial nach außen gerichteten Fläche des ersten radial nach außen gerichteten Zylinders (132; 232) durch die radial ausgerichtete Öffnung (136; 236) an einem ersten Ende (102; 202) des Bohrlochkorbs (130; 230) in den Spalt (133; 233), der durch den radial nach außen gerichteten ersten Zylinder (132; 232) und den radial nach innen gerichteten zweiten Zylinder (134; 234) definiert ist; und durch die radial ausgerichtete Öffnung (138; 238) an einem zweiten Ende (104; 204) des Bohrlochkorbs (130; 230) gegenüber dem ersten Ende (102; 202), definieren.

## Revendications

1. Turbine à gaz (20) comprenant :
une section de compresseur (24) ;
une chambre de combustion (26) reliée fluidiquement au compresseur (24) ;
une section de turbine (28) reliée fluidiquement à la chambre de combustion (26) ;
une ouverture d'alésage de rotor (112 ; 212) disposée radialement vers l'intérieur d'une pluralité de rotors dans l'une de ladite section de compresseur (24) et de ladite section de turbine (28), dans laquelle l'ouverture d'alésage de rotor (112 ; 212) est définie par une structure de plaque tournante à l'avant (120; 220), un panier d'alésage (130 ; 230) et une connexion entre ledit panier d'alésage (130 ; 230) et un alésage de rotor le plus à l'arrière (110) dans ladite ouverture d'alésage de rotor (112 ; 212) ;
dans laquelle ledit panier d'alésage (130 ; 230) définit un cylindre ayant un axe, et dans laquelle ledit panier d'alésage (130 ; 230) comprend :
un premier cylindre radialement vers l'extérieur (132 ; 232) ;
un second cylindre radialement vers l'intérieur (134 ; 234) disposé dans ledit premier cylindre radialement vers l'extérieur (132 ; 232) ;
un espace aligné axialement (133 ; 233) défini par ledit premier cylindre radialement vers l'extérieur (132 ; 232) et ledit second cylindre radialement vers l'intérieur (134 ; 234) ; et
une interconnexion mécanique reliant ledit premier cylindre radialement vers l'extérieur (132 ; 232) audit second cylindre radialement vers l'intérieur (134 ; 234), de sorte que ledit premier cylindre radialement vers l'extérieur (132 ; 232) et ledit second cylindre radialement vers l'intérieur (134 ; 234) sont une structure unitaire ;
dans laquelle ledit premier cylindre radialement vers l'extérieur (132 ; 232) a au moins une ouverture alignée radialement (136 ; 236) sur une première extrémité (102 ; 202) dudit panier d'alésage (130 ; 230) et dans laquelle ledit second cylindre radialement vers l'intérieur a une ouverture alignée radialement (138 ; 238) sur une seconde extrémité (104 ; 204) dudit panier d'alésage (130 ; 230) opposée à ladite première extrémité (102 ; 202) ; et
dans laquelle ledit cylindre radialement vers l'intérieur (134 ; 234) comprend un bras à encliquetage (170 ; 270), et dans laquelle ledit bras à encliquetage (170 ; 270) s'interface avec un alésage de rotor (110) à l'arrière de ladite ouverture d'alésage de rotor (112 ; 212).

2. Turbine à gaz selon la revendication 1, dans laquelle ladite interconnexion mécanique est au moins l'une d'une connexion brasée et d'une connexion soudée.

3. Turbine à gaz selon les revendications 1 ou 2, dans laquelle le panier d'alésage (130 ; 230) comprend en outre au moins une entretoise structurelle (101 ; 201) reliant ledit premier cylindre radialement vers l'extérieur (132 ; 232) audit cylindre radialement vers l'intérieur (134 ; 234).

4. Turbine à gaz selon la revendication 3, dans laquelle l'au moins une entretoise (101 ; 201) comprend une pluralité d'entretoises (101; 201) disposées circonférentiellement autour dudit cylindre radialement vers l'intérieur (134 ; 234) dans au moins une position axiale.

5. Turbine à gaz selon les revendications 3 ou 4, dans laquelle ladite au moins une entretoise (101; 201) est mécaniquement interconnectée avec au moins l'un dudit premier cylindre radialement vers l'extérieur (132 ; 232) et dudit cylindre radialement vers l'intérieur (134 ; 234), de sorte que l'au moins une entretoise (101; 201) et le panier d'alésage (130 ; 230) comprennent une structure unitaire.

6. Turbine à gaz selon une quelconque revendication précédente, dans laquelle ledit cylindre radialement vers l'intérieur (134 ; 234) comprend une structure de siège ayant une surface alignée axialement, et dans laquelle ladite surface alignée axialement de ladite structure de siège est en contact avec une surface intérieure dudit premier cylindre radialement vers l'extérieur (132 ; 232).

7. Turbine à gaz selon la revendication 6, dans laquelle ladite interconnexion mécanique est une interconnexion mécanique entre ladite surface alignée axialement de ladite structure de siège et ladite surface intérieure dudit premier cylindre radialement vers l'extérieur (132 ; 232).

8. Turbine à gaz selon une quelconque revendication précédente, dans laquelle ledit cylindre radialement vers l'intérieur (134 ; 234) comprend une surface de contact (137 ; 237) faisant face radialement vers l'extérieur à la seconde extrémité, à ladite seconde extrémité (104 ; 204), ledit premier cylindre radialement vers l'extérieur (132 ; 232) comprend une surface de contact (137 ; 237) faisant face radialement vers l'intérieur à la seconde extrémité, à ladite seconde extrémité (104 ; 204), et dans laquelle ladite surface de contact (137 ; 237) faisant face radialement vers l'extérieur à la seconde extrémité et ladite surface de contact (137 ; 237) faisant face radialement vers l'intérieur à la seconde extrémité sont interconnectées mécaniquement.

9. Turbine à gaz selon une quelconque revendication précédente, dans laquelle ladite première extrémité (102 ; 202) dudit panier d'alésage (130 ; 230) est à l'arrière dans ladite turbine à gaz (20), par rapport à l'écoulement de fluide, et dans laquelle ladite seconde extrémité (104 ; 204) dudit panier d'alésage (130 ; 230) est à l'avant dans ladite turbine à gaz (20) par rapport à l'écoulement de fluide.

10. Turbine à gaz selon une quelconque revendication précédente, comprenant en outre une structure définissant au moins partiellement une paroi avant dudit alésage, et dans laquelle ladite structure comporte une entrée d'air froid dans ledit alésage.

11. Turbine à gaz selon la revendication 10, dans laquelle ladite plaque tournante (120), ledit alésage (110) et ledit panier d'alésage (130 ; 230) définissent un chemin d'écoulement d'air froid à partir de ladite entrée, le long d'une surface radialement vers l'extérieur dudit premier cylindre radialement vers l'extérieur (132 ; 232), à travers ladite ouverture alignée radialement (136 ; 236) sur une première extrémité (102 ; 202) dudit panier d'alésage (130 ; 230) dans ledit espace (133 ; 233) défini par ledit premier cylindre radialement vers l'extérieur (132 ; 232) et ledit second cylindre radialement vers l'intérieur (134 ; 234) ; et à travers ladite ouverture alignée radialement (138 ; 238) sur une seconde extrémité (104 ; 204) dudit panier d'alésage (130 ; 230) opposée à ladite première extrémité (102 ; 202).
